# EUROPEAN PATENT APPLICATION

(11) **EP 4 632 544 A1**
(43) Date of publication of application: **15.10.2025**
(21) Application number: 23902377.3
(22) Date of filing: 10.11.2023
(51) Int. Cl.: G06F 3/0481

(54) **SPLIT-SCREEN DISPLAY METHOD AND APPARATUS, TERMINAL, STORAGE MEDIUM, AND PROGRAM PRODUCT**

(30) Priority: 14.12.2022 CN 202211608261
(71) Applicant: GUANGDONG OPPO MOBILE TELECOMMUNICATIONS CORP., LTD., Dongguan, Guangdong 523860 (CN)
(72) Inventor: LIANG, Desheng, Dongguan, Guangdong 523860 (CN)
(74) Representative: Novagraaf Technologies
(86) International application number: PCT/CN2023/130923
(87) International publication number: WO 2024/125177

(57) **Abstract**

A split-screen display method and apparatus, a terminal, a storage medium, and a program product, relating to the technical field of man-machine interaction. The method comprises: when a continuous touch operation is received and the continuous touch operation meets a split-screen trigger condition, displaying a split-screen trigger dynamic effect on the basis of a touch parameter of the continuous touch operation (101); when the continuous touch operation meets a split-screen entry condition and the continuous touch operation ends, displaying a split-screen entry dynamic effect, wherein the split-screen entry dynamic effect is used for triggering transition display of a split-screen application selection interface (102); and in response to a selection operation on a target split-screen application in the split-screen application selection interface, entering a split-screen mode, and displaying a split-screen application interface in the split-screen mode, wherein the split-screen application interface comprises an application interface of the target split-screen application (103).

## Description

The present application claims priority of Chinese Patent Application No. 202211608261.2, in the title of "SPLIT-SCREEN DISPLAY METHOD AND APPARATUS, TERMINAL, STORAGE MEDIUM, AND PROGRAM PRODUCT", filed on December 14, 2022, the entire contents of which are hereby incorporated by reference in their entirety.

### TECHNICAL FIELD

The present disclosure relates to the field of human-computer interaction technologies, and in particular to a split-screen display method and an apparatus, a terminal, a storage medium, and a program product.

### BACKGROUND

The accelerated evolution of intelligent terminals has substantially enriched their application functionalities, concomitantly intensifying user demand for concurrently displaying dual application interfaces on a singular device, which necessitates a split-screen display.

In the related art, terminals respond to user-initiated activation of split-screen controls, encompassing either sidebar triggering or drag gesture triggering, thereby effectuating the split-screen display.

However, during the invocation of said technical solutions to activate the split-screen controls in the related art, the accompanying visual effects exhibit excessive uniformity, resulting in poor integration between the split-screen animation and gesture operations, and weak correlation.

### SUMMARY OF THE DISCLOSURE

The present disclosure provides a split-screen display method and an apparatus, a terminal, a storage medium, and a program product.

A split-screen display method, including:
displaying a split-screen trigger animation based on a touch parameter of a continuous touch operation, in a case where the continuous touch operation is received and the continuous touch operation meets a split-screen trigger condition;
displaying a split-screen entry animation, in a case where the continuous touch operation meets a split-screen entry condition and the continuous touch operation ends; wherein the split-screen entry animation is configured to trigger a transition display of a split-screen application selection interface; and
entering a split-screen mode and displaying a split-screen application interface in the split-screen mode, in response to a selection operation of a target split-screen application in the split-screen application selection interface; wherein the split-screen application interface includes an application interface of the target split-screen application.

A split-screen display apparatus, including:
an animation display module, configured to display a split-screen trigger animation based on a touch parameter of a continuous touch operation, in a case where the continuous touch operation is received and the continuous touch operation meets a split-screen trigger condition, and further configured to display a split-screen entry animation, in a case where the continuous touch operation meets a split-screen entry condition and the continuous touch operation ends; wherein the split-screen entry animation is configured to trigger a transition display of a split-screen application selection interface; and
an application interface display module, configured to enter a split-screen mode and display a split-screen application interface in the split-screen mode, in response to a selection operation of a target split-screen application in the split-screen application selection interface; wherein the split-screen application interface includes an application interface of the target split-screen application.

A terminal, including a processor and a memory; wherein the memory stores at least one instruction, the at least one instruction being configured to be executed by the processor to implement the split-screen display method as above.

A computer-readable storage medium, storing at least one program code; wherein the at least one program code is configured to be loaded and executed by a processor to implement the split-screen display method as above.

A computer program product, including computer instructions; wherein the computer instructions are stored in a computer-readable storage medium; a processor of a computer device is capable of reading the computer instructions from the computer-readable storage medium and executing the computer instructions, and the computer device is caused to perform the split-screen display method as above.

### BRIEF DESCRIPTION OF THE DRAWINGS

In order to more clearly illustrate the technical solution in the embodiments of the present disclosure, the following is a brief description of the drawings needed to be used in the description of the embodiments. Obviously, the drawings in the following description are only some embodiments of the present disclosure, and other drawings may be obtained based on these drawings.
FIG. 1 is a flowchart of a split-screen display method according to some embodiments of the present disclosure.
FIG. 2 is a schematic diagram of a continuous touch operation triggering a split-screen display according to some embodiments of the present disclosure.
FIG. 3 is a schematic diagram of a split-screen trigger animation according to some embodiments of the present disclosure.
FIG. 4 is a schematic diagram of a split-screen entry animation according to some embodiments of the present disclosure.
FIG. 5 is a schematic diagram of a split-screen application selection interface according to some embodiments of the present disclosure.
FIG. 6 is a schematic diagram of a split-screen entry animation according to other embodiments of the present disclosure.
FIG. 7 is a schematic diagram of a split-screen application selection interface according to other embodiments of the present disclosure.
FIG. 8 is a schematic diagram of entering a split-screen mode according to some embodiments of the present disclosure.
FIG. 9 is a structural block diagram of a split-screen display apparatus according to some embodiments of the present disclosure.
FIG. 10 is a structural block diagram of a terminal according to some embodiments of the present disclosure.

### DETAILED DESCRIPTION

To make the objectives, technical solutions, and advantages of the present disclosure clearer, the following detailed description of the implementations of the present disclosure will be provided with reference to the accompanying drawings.

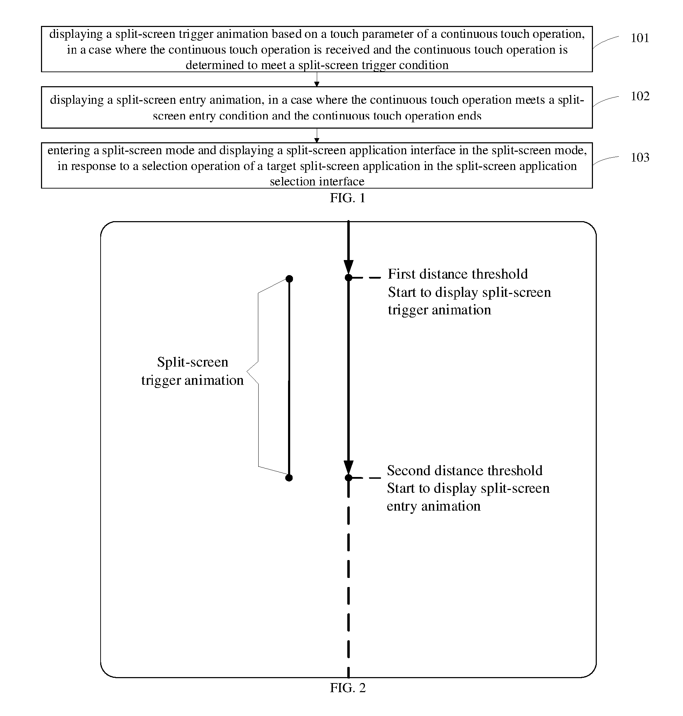

FIG. 1 is a flowchart of a split-screen display method according to some embodiments of the present disclosure. The method includes operations at blocks illustrated herein.

At block 101: displaying a split-screen trigger animation based on a touch parameter of a continuous touch operation, in a case where the continuous touch operation is received and the continuous touch operation is determined to meet a split-screen trigger condition.

The continuous touch operation may include a sliding operation, a long-press operation, a press operation, a drag operation, etc. The present disclosure does not limit the specific manner of the continuous touch operation.

When the terminal receives a continuous touch operation that meets the split-screen trigger condition, it displays the split-screen trigger animation based on the touch parameter of the touch operation.

Different types of continuous touch operations correspond to different split-screen trigger conditions and touch parameters of the touch operations.

In some implementations, when the continuous touch operation is a sliding operation, the split-screen trigger condition corresponding to the continuous touch operation may be that a sliding distance of the continuous touch operation reaches a corresponding length or the continuous touch operation slides to a specific position on the screen, and the touch parameter may be the sliding distance. When the sliding distance received by the terminal is greater than the distance threshold or the continuous touch operation reaches the specific position on the screen, the terminal displays the split-screen trigger animation based on the sliding distance.

In other implementations, the continuous touch operation is a long-press operation, and the touch parameter may be a duration of the long-press operation. When the duration of the long-press operation reaches a time threshold, the split-screen trigger condition is met, and the terminal displays the split-screen trigger animation based on the duration of the long-press operation.

In other implementations, the continuous touch operation is a continuous press operation, and the touch parameter may be a duration of the press operation. When a press force of the press operation reaches a set value, the press operation is deemed to have started timing, and when the duration of the press operation exceeds the duration threshold, the split-screen trigger animation is displayed.

In addition, the continuous touch operation may be a combination of two different gesture operations, such as combining a press operation with a sliding operation, which may be a long-press and sliding operation. When the terminal receives a long-press and sliding operation and the duration of the long-press phase meets the split-screen trigger condition, the terminal displays the split-screen trigger animation based on the sliding distance of the sliding phase of the long-press and sliding operation.

The terminal displays split-screen animations based on the touch parameter, i.e., the display screen changes in response to touch. The changes may include changing the blurriness of the display interface, changing the color of the display interface, and changing the brightness of the display interface, etc.

In some embodiments, when the continuous touch operation is a sliding operation, the terminal displays the split-screen trigger animation based on the sliding distance of the sliding operation. The blurriness of the display interface changes as the sliding distance increases. Specifically, at the time when the terminal receives starts to receive the sliding operation, the blurriness of the display interface is minimal, and as the sliding distance increases, the blurriness of the display interface gradually increases. Alternatively, the blurriness of the display interface decreases as the sliding distance increases.

In some embodiments, when the continuous touch operation is a sliding operation, the terminal displays the split-screen trigger animation based on the sliding distance of the sliding operation, and the color of the display interface changes as the sliding distance increases.

In some embodiments, when the continuous touch operation is a sliding operation, the terminal displays the split-screen trigger animation based on the sliding distance of the sliding operation, and the brightness of the display interface changes as the sliding distance increases, i.e., the display interface gradually darkens with the increase in sliding distance, or the display interface gradually brightens with the increase in sliding distance.

In some embodiments, the split-screen trigger animation may be obtained by combining multiple dimensional transformation forms, such as combining the blurriness of the display interface with the color of the display interface. As the sliding distance increases with the sliding operation, both the blurriness and the color of the display interface change.

When continuous touch operation is other gesture operations, the changes in the split-screen trigger animation may refer to the above-mentioned possible situations, which will not be repeated herein.

It should be noted that the split-screen trigger animation is performed in conjunction with the continuous touch operation, and the display change state of the split-screen trigger animation remains synchronized with the continuous touch operation. When the continuous touch operation is paused, the split-screen trigger animation may also pause accordingly.

At block 102: displaying a split-screen entry animation, in a case where the continuous touch operation meets a split-screen entry condition and the continuous touch operation ends.

The split-screen entry animation is configured to trigger a transition display of a split-screen application selection interface.

When the terminal receives a continuous touch operation that meets the split-screen entry condition, it displays the split-screen entry animation after the continuous touch operation ends.

The split-screen entry condition varies depending on the type of continuous touch operation.

When the continuous touch operation is a sliding operation, the corresponding split-screen entry condition may be that the sliding distance reaches a specified length, or that an end position of the sliding operation is at a specified position on the screen, etc. When the sliding distance received by the terminal reaches the specified length, or when the sliding operation reaches the specified position, etc., the sliding operation meets the split-screen entry condition, and the split-screen entry animation is displayed when the sliding operation ends.

In some implementations, the continuous touch operation is a long-press operation, and the split-screen entry condition may be that the duration of the long-press operation reaches a set duration, the split-screen entry condition is met, and when the long-press operation ends, the split-screen entry animation is displayed.

In other implementations, the continuous touch operation is a press operation, and the split-screen entry condition may be a press force and a press duration of the press operation. When the press force reaches a set value and the press duration reaches a set duration, the split-screen entry condition is met, and when the press operation ends, the split-screen entry animation is displayed.

The split-screen entry animation may be a dynamic effect that is automatically displayed after the continuous touch operation ends. After the terminal receives a signal that the continuous touch operation has ended, it begins to display the split-screen entry animation. The split-screen entry animation may trigger the transition display of the split-screen application selection interface. The split-screen entry animation may include dynamic changes in one or more dimensions, such as blurriness, color, brightness, and display content of the display interface.

In some embodiments, when the continuous touch operation meets the split-screen trigger condition but does not meet the split-screen entry condition, and the continuous touch operation ends, the split-screen trigger animation is canceled, and an original application interface is displayed.

At block 103: entering a split-screen mode and displaying a split-screen application interface in the split-screen mode, in response to a selection operation of a target split-screen application in the split-screen application selection interface.

The split-screen application interface includes an application interface of the target split-screen application.

The split-screen application interface displays multiple application icons for the user to select applications that he/she wishes to display in the split-screen mode.

After the terminal receives the user's selection of the target split-screen application in the split-screen application selection interface, the terminal enters the split-screen mode and displays the application interface corresponding to the selected application icon.

The split-screen mode may be either an up-down split-screen mode or a left-right split-screen mode, and the sizes of the two split-screen application interfaces in the split-screen mode may be different.

In some embodiments, a split-screen control widget may be displayed on the screen in the split-screen mode, which may respond to a user's trigger operation to adjust the display state of the two split-screen application interfaces.

For example, the two split-screen application interfaces are displayed on the left and right sides of the screen, respectively, and a split-screen control widget is displayed at the boundary between the two split-screen application interfaces. Upon receiving the user's drag operation on the widget, the terminal adjusts the size of the split-screen application interfaces based on the drag operation.

In summary, in the embodiments of the present disclosure, the terminal may display different animations at different stages of the user's continuous touch operation. When the split-screen trigger condition is met, the terminal displays the split-screen trigger animation; when the split-screen entry condition is met, the terminal displays the split-screen entry animation. By combining the display animations with the user's gesture operations and displaying different animations based on the user's gestures, the terminal may provide natural guidance to the user for completing the split-screen operation. Furthermore, when the terminal receives the user's selection operation for the target application in the split-screen application selection interface, the terminal may display the split-screen application interface in the split-screen mode.

In some embodiments, the continuous touch operation may be a sliding operation;
the displaying a split-screen trigger animation based on a touch parameter of a continuous touch operation, in a case where the continuous touch operation is received and the continuous touch operation meets a split-screen trigger condition, includes:
in a case where a sliding operation is received and a sliding distance of the sliding operation reaches a first distance threshold, displaying the split-screen trigger animation based on the sliding distance of the sliding operation;
where the displaying a split-screen entry animation, in a case where the continuous touch operation meets a split-screen entry condition and the continuous touch operation ends, includes:
   in a case where the sliding distance of the sliding operation reaches a second distance threshold and the sliding operation ends, displaying the split-screen entry animation; where the second distance threshold is greater than the first distance threshold.

In some embodiments, the displaying the split-screen trigger animation based on the sliding distance of the sliding operation includes:
performing a blurring process on a current user interface based on the sliding distance of the sliding operation, and displaying a dividing line on the current user interface based on the sliding distance;
where blurriness caused by the blurring process is positively correlated with the sliding distance, and a length of the dividing line is positively correlated with the sliding distance.

In some embodiments, the displaying a split-screen entry animation includes:
displaying a first split-screen application window and a second split-screen application window; where the first split-screen application window and the second split-screen application window are configured to display the split-screen application interface;
displaying an animation where the first split-screen application window moves in a first direction and the second split-screen application window moves in a second direction; where the first direction is opposite to the second direction, and the split-screen application selection interface is located below the first split-screen application window and the second split-screen application window; and
in a case where the first split-screen application window moves to a first screen edge and the second split-screen application window moves to a second screen edge, displaying the split-screen application selection interface; where a part of the first split-screen application window and a part of the second split-screen application window are located on an upper layer of the split-screen application selection interface.

In some embodiments, the displaying a first split-screen application window and a second split-screen application window includes:
in a case where an original application that is displayed in a foreground exists, displaying the first split-screen application window in a first display state and the second split-screen application window in a second display state; where the first split-screen application window is configured to display the original application and the second split-screen application window is configured to display the target split-screen application;
the displaying a split-screen application interface in the split-screen mode, in response to a selection operation of a target split-screen application in the split-screen application selection interface, includes:
   in response to the selection operation of the target split-screen application in the split-screen application selection interface, displaying an application interface of the original application in the first split-screen application window and an application interface of the target split-screen application in the second split-screen application window.

In some embodiments, before the displaying an application interface of the original application in the first split-screen application window and an application interface of the target split-screen application in the second split-screen application window, the method further includes:
in response to the selection operation of the target split-screen application in the split-screen application selection interface, switching the second split-screen application window from the second display state to the first display state.

In some embodiments, the displaying a first split-screen application window and a second split-screen application window includes:
displaying the first split-screen application window and the second split-screen application window in a second display state, in a case where no original application that is displayed in a foreground exists; where the first split-screen application window and the second split-screen application window are configured to display the target split-screen application;
the displaying a split-screen application interface in the split-screen mode, in response to a selection operation of a target split-screen application in the split-screen application selection interface, includes:
   in response to a selection operation in the split-screen application selection interface for a first target split-screen application and a second target split-screen application, displaying an application interface of the first target split-screen application in the first split-screen application window, and displaying an application interface of the second target split-screen application in the second split-screen application window.

In some embodiments, before the displaying an application interface of the first target split-screen application in the first split-screen application window, and displaying an application interface of the second target split-screen application in the second split-screen application window, the method further includes:
in response to the selection operation of the first target split-screen application in the split-screen application selection interface, switching the first split-screen application window from the second display state to a first display state; and
in response to the selection operation of the second target split-screen application in the split-screen application selection interface, switching the second split-screen application window from the second display state to the first display state.

In some embodiments, a transparency of a split-screen application window in the first display state is lower than a transparency of the split-screen application window in the second display state.

In some embodiments, the displaying a split-screen application interface in the split-screen mode, in response to a selection operation of a target split-screen application in the split-screen application selection interface, includes:
in response to a selection operation of a first application in the split-screen application selection interface, displaying an animation where the first split-screen application window moves in the second direction and the second split-screen application window moves in the first direction; and
in a case where the first split-screen application window and the second split-screen application window stop moving, displaying the split-screen application interface in the first split-screen application window and the second split-screen application window.

In some embodiments, after the displaying a split-screen trigger animation based on a touch parameter of the continuous touch operation, the method further includes:
in a case where the continuous touch operation does not meet the split-screen entry condition and the continuous touch operation ends, displaying a first exit animation; where the first exit animation is a reverse animation of the split-screen trigger animation.

In some embodiments, after the displaying a split-screen entry animation, the method further includes:
in response to a split-screen exit operation, displaying a second exit animation; where the second exit animation is configured to trigger a restoration of a display state prior to split screen.

The split-screen trigger animation and split-screen entry animation are displayed only when the terminal receives the continuous touch operation, thereby completing the split-screen display. The continuous touch operation may be a sliding operation, a press operation, a long-press operation, etc. The embodiments of the present disclosure will take the continuous touch operation as a sliding operation to illustrate the split-screen display method.

When the continuous touch operation is a sliding operation, the corresponding touch parameter is a sliding distance. Therefore, when the terminal receives a sliding operation and the sliding distance of the sliding operation reaches a first distance threshold, the split-screen trigger animation is displayed based on the sliding distance of the sliding operation. When the sliding distance reaches a second distance threshold and the sliding operation ends, the split-screen entry animation is displayed. The second distance threshold is greater than the first distance threshold.

The sliding operation may be a single-finger sliding operation, a two-finger sliding operation, or a multi-finger sliding operation. In some embodiments, since single-finger sliding operations are widely used to trigger various functions in conventional scenarios, to prevent the terminal from incorrectly identifying user gestures, the sliding operation may be a two-finger sliding operation or a multi-finger sliding operation.

In a case where the sliding operation is a two-finger sliding operation, the terminal may detect touch operations on the touchscreen. When a two-finger sliding operation on the touchscreen is detected, the terminal may respond to the two-finger sliding operation to determine whether the split-screen trigger condition is met.

In some embodiments, when the terminal detects a two-finger sliding operation on the screen, it may respond to the two-finger sliding operation to obtain a sliding direction of the two-finger sliding operation and a starting position and an end position of the sliding operation.

In some embodiments, the first distance threshold may be an actual sliding length of the sliding operation. When the sliding operation starts from an edge of the screen, the first sliding distance may be a distance between a touch position within the first screen and the edge of the screen where the starting position of the sliding operation is located.

In some embodiments, the screen of the terminal includes a first edge and a second edge that are opposite to each other, and the terminal may be configured to store a first preset distance and a second preset distance. The sliding direction of the sliding operation is from the first edge toward the second edge. The first preset distance is configured as a distance between the starting position of the sliding operation and the first edge, and the second preset distance is configured as a basis for determining the distance between the end position of the sliding operation and the second edge. Therefore, after obtaining the starting position of the sliding operation, the terminal can calculate the distance between the starting position and the first edge, and compare this distance with the first preset distance to determine whether the sliding starting position is within the first preset distance range of the first edge. When the terminal determines that the starting position is within the first preset distance range of the first edge and the sliding distance of the sliding operation reaches the first distance threshold, the terminal displays the split-screen trigger animation based on the sliding distance of the sliding operation.

In other embodiments, when the terminal receives a sliding operation, it responds to the sliding operation to obtain a sliding direction of the sliding operation. When the sliding direction is determined to be a target sliding direction and the sliding distance is greater than the first distance threshold, the terminal displays the split-screen trigger operation based on the sliding distance of the sliding operation. In some embodiments, the target sliding direction is stored in the terminal during development. When the terminal receives the sliding operation, it compares the sliding direction of the sliding operation with the stored target sliding direction to determine whether the sliding direction of the sliding operation is the target sliding direction. In some embodiments, the terminal determines the target sliding direction based on a starting position of the sliding position. When the sliding operation is received, the starting position is determined, a screen edge closest to the starting position is determined as a start screen edge, and another screen edge opposite the start screen edge is determined as an end screen edge. The direction perpendicular to the start screen edge and pointing toward the end screen edge is determined as the target sliding direction.

After the terminal obtains the end position of the sliding operation, it can calculate the distance between the end position and the second edge, and compare the distance between the end position and the second edge with the second preset distance to determine whether the end position is within the second preset distance of the second edge. When the sliding distance of the sliding operation reaches the second distance threshold and the end position of the sliding operation is within the second preset distance of the second edge, the split-screen entry animation is displayed.

In most cases, the edge closest to the starting position of the sliding operation is opposite to the edge closest to the end position of the sliding operation.

Determining whether to display the split-screen trigger animation and the split-screen entry animation based on the first preset distance and the second preset distance may reduce the probability of mis-operation.

The terminal displays the split-screen trigger animation based on the sliding distance of the sliding operation, i.e., the display effect of the current user interface changes according to the sliding distance of the sliding operation. The split-screen trigger animation may involve changes in the blurriness, color, or content of the display interface.

In some implementations, the terminal blurs the current user interface based on the sliding distance of the sliding operation, and the blurriness is positively proportional to the sliding distance, i.e., the greater the sliding distance, the higher the blurriness of the user display interface. The blurring effect may be Gaussian blur, granular blur, radial blur, directional blur, etc., which is not limited herein.

For illustrative purposes, FIG. 2 is a schematic diagram of a continuous touch operation triggering a split-screen display according to some embodiments of the present disclosure. In the illustrated embodiments, the continuous touch operation is a sliding operation, with the starting position being the middle of the upper edge of the screen and the sliding direction being downward. When the terminal receives the sliding operation and the sliding distance reaches the first distance threshold, the split-screen trigger animation is displayed, and the blurriness of the user interface increases with the increase in sliding distance. When the sliding distance reaches the first distance threshold and the sliding operation ends, the split-screen entry animation is displayed.

Additionally, the terminal displays a dividing line on the current user interface based on the sliding distance. The direction of the dividing line aligns with the sliding direction, and the dividing line separates the two split-screen application windows, which are positioned on both sides of the dividing line. During the split-screen trigger animation, the length of the dividing line is positively proportional to the sliding distance.

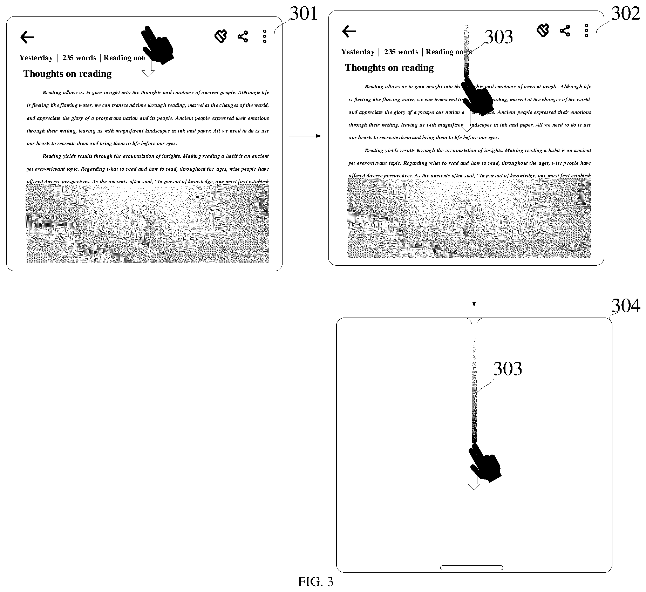

For illustrative purposes, FIG. 3 is a schematic diagram of a split-screen trigger animation according to some embodiments of the present disclosure. In the illustrated embodiments, in a first display interface 301, the terminal receives a sliding operation, at which time the sliding distance is less than the first distance threshold, and the application interface is displayed normally without any changes. In a second display interface 302, the terminal determines that the sliding distance is greater than the first distance threshold, begins to blur the current user interface based on the sliding distance, and displays a dividing line 303. The blurriness of the user interface increases with the increase in the sliding distance, and the length of the dividing line 303 increases with the increase in the sliding distance. In a third display interface 304, the sliding distance is about to reach the second distance threshold, at which time the blurriness of the user interface reaches its maximum, and the dividing line extends as the sliding distance increases.

When the continuous touch operation meets the split-screen trigger condition, the terminal displays the split-screen trigger animation, allowing users to observe the split-screen process more intuitively while naturally guiding them to continue the touch operation and complete the split-screen display.

When the terminal displays the split-screen entry animation, it may first display a first split-screen application window and a second split-screen application window. The first split-screen application window and the second split-screen application window are configured to display the split-screen application interface. The first split-screen application window and the second split-screen application window are displayed on both sides of the dividing line.

In the embodiments of the present disclosure, the terminal displays the first split-screen application window and the second split-screen application window within the display interface according to the sliding direction. The shapes of the first split-screen application window and the second split-screen application window may be the same or different. The sizes of the first split-screen application window and the second split-screen application window may be the same or different. The first split-screen application window may be displayed above the second split-screen application window, below the second split-screen application window, to the left of the second split-screen application window, or to the right of the second split-screen application window, which is not limited herein.

In some implementations, after obtaining the sliding direction of a two-finger sliding operation, the terminal may determine the split-screen direction based on the sliding direction. In some embodiments, the terminal pre-sets a mapping table of multiple sliding directions and multiple split-screen directions, and stores the corresponding relationships between the multiple sliding directions and the multiple split-screen directions in the mapping table. When the terminal obtains the sliding direction, it determines the split-screen direction corresponding to the sliding direction based on the corresponding relationship indicated by the mapping table.

In some embodiments, when the terminal determines that the sliding direction corresponding to a sliding operation is parallel to the vertical axis of the screen, the split-screen direction may be determined to be parallel to the vertical axis of the screen, i.e., the screen's displayable area is split into left and right screens. When it is determined that the sliding direction corresponding to the sliding operation is parallel to the horizontal axis of the screen, the split-screen direction may be determined to be parallel to the horizontal axis of the screen, i.e., the screen's displayable area is split vertically. When it is determined that the sliding direction corresponding to the sliding operation is parallel to the diagonal direction of the screen, the split-screen direction may be determined to be parallel to the diagonal direction of the screen, i.e., the screen's displayable area is split diagonally.

After displaying the first split-screen application window and the second split-screen application window on the terminal, the first split-screen application window moves in a first direction, and the second split-screen application window moves in a second direction, where the first direction and the second direction are opposite to each other, and the split-screen application selection interface is located below the first split-screen application window and the second split-screen application window.

In some embodiments, when the continuous touch operation is a sliding operation, the first direction and the second direction are perpendicular to the sliding direction. For example, when the sliding operation is a downward slide from the top edge of the screen, the first direction is to the right or left, and the second direction is opposite to the first direction. This approach aligns better with human cognitive logic, presenting the effect of the screen being split by a sliding operation, and offering users a more natural visual animation.

In some implementations, when the sliding operation is a downward slide, the first split-screen application window and the second split-screen application window are displayed on both sides of the dividing line, with the first split-screen application window on the left side of the dividing line and the second split-screen application window on the right side of the dividing line. In this case, the first direction is leftward, and the second direction is rightward. After displaying the first split-screen application window and the second split-screen application window, the terminal displays the first split-screen application window on the left moving to the left and the second split-screen application window on the right moving to the right.

Displaying the two split-screen application windows moving in opposite directions visually presents an opening effect, gradually revealing the split-screen application selection interface, thereby enhancing the visual appeal of the split-screen transition animation.

The split-screen application selection interface is located below the first split-screen application window and the second split-screen application window. The split-screen application selection interface may be a main interface of the terminal, which displays all application icons on the terminal; or it may be a processed application icon display interface, which only displays application icons that support the split-screen mode.

In some implementations, the split-screen application selection interface is the main interface of the terminal. When the terminal receives the user's selection operation of the target split-screen application in the split-screen application selection interface, it determines whether the target split-screen application supports the split-screen mode based on stored data of the target split-screen application. When the target split-screen application supports the split-screen mode, the split-screen application interface is displayed in the split-screen mode. When the target split-screen application does not support the split-screen mode, the terminal displays a "split-screen not supported" prompt to the user and exits the split-screen display program.

In other implementations, the content displayed on the split-screen application selection interface may be switched based on user settings. For example, the user may set the split-screen application selection interface as the main interface, or display specific application icons on the split-screen application selection interface based on the user's usage habits for selection.

When the first split-screen application window moves to a first screen edge and the second split-screen application window moves to a second screen edge, the split-screen application selection interface is displayed. In this case, a part of the first split-screen application window and a part of the second split-screen application window are located on an upper layer of the split-screen application selection interface.

The first screen edge and the second screen edge are two opposite screen edges. The first screen edge corresponds to the first direction, and the second screen edge corresponds to the second direction. For example, when the first screen edge is a left edge of the screen, then the second screen edge is a right edge of the screen, and correspondingly, the first direction is a leftward direction, and the second direction is a rightward direction.

Both the first split-screen application window and the second split-screen application window are located on the upper layer of the split-screen application selection interface. As the first split-screen application window and the second split-screen application window move, the split-screen application selection interface gradually becomes visible as the split-screen application windows move.

In some embodiments, as the first split-screen application window and the second split-screen application window move, the blurriness of the current user interface gradually decreases. When the first split-screen application window and the second split-screen application window move to the first screen edge and the second screen edge, respectively, the blurriness of the current user interface decreases to 0.

In some embodiments, after the split-screen application selection interface is fully displayed, the terminal displays an application selection prompt in the application selection interface, for prompting the user to trigger the application icon and select the application to be displayed in the split-screen mode.

When the terminal receives the continuous touch operation, the user interface may have the following two screen display states:
1. When the continuous touch operation is received, an original application is displayed in the foreground.

When the original application that is displayed in the foreground exists, the terminal displays the first split-screen application window in a first display state and the second split-screen application window in a second display state. The first split-screen application window is configured to display an application interface of the original application, and the second split-screen application window is configured to display the target split-screen application selected by the user in the split-screen application selection interface.

The first display state and the second display state are different display states of the same split-screen application window under different condition. When the application interface to be displayed in the split-screen application window has been determined, the split-screen application window is in the first display state; when the application interface to be displayed in the split-screen application window has not been determined, the split-screen application window is in the second display state.

In some embodiments, the first display state and the second display state may have certain differences in display effects such as display content, display brightness, and display color, such that users can identify whether the split-screen application window displays the split-screen application interface based on the different display states of the split-screen application window.

In some embodiments, the first display state and the second display state may be distinguished based on the brightness of the split-screen application window, where the first display state is bright and the second display state is dark; or the first display state and the second display state may be distinguished based on transparency, where the first display state is opaque and the second display state is transparent; or the first display state and the second display state may be distinguished based on color, where the first display state is a first color and the second display state is a second color.

In the illustrated embodiments of the present disclosure, the first display state and the second display state are distinguished by transparency to describe the two display states of the split-screen application window, and this does not constitute a limitation on the scope of the present disclosure. The transparency of the split-screen application window in the first display state is lower than that of the split-screen application window in the second display state.

In some embodiments, the display state of the split-screen application window may be changed according to the displayed content.

It should be noted that in the embodiments of the present disclosure, "first" and "second" are only intended to distinguish between two different split-screen application windows or two different display states. For example, without departing from the scope of the present disclosure, the second split-screen application window may be referred to as a first split-screen application window, and the first split-screen application window may be referred to as a second split-screen application window. Similarly, the first display state may be referred to as a second display state, and the second display state may be referred to as a first display state.

In some embodiments, before the first split-screen application window and the second split-screen application window move to the screen edges, the first split-screen application window displays an application icon of the original application.

When the first split-screen application window moves to the first screen edge and the second split-screen application window moves to the second screen edge, the terminal displays the split-screen application selection interface. In response to the selection operation of the target split-screen application in the split-screen application selection interface, the terminal displays the application interface of the original application in the first split-screen application window and the application interface of the target split-screen application in the second split-screen application window.

Additionally, before displaying the application interface of the original application in the first split-screen application window and the application interface of the target split-screen application in the second split-screen application window upon receiving the selection operation of the target split-screen application, the terminal responds to the selection operation of the target split-screen application in the split-screen application selection interface to switch the second split-screen application window from the second display state to the first display state.

In some embodiments, the difference between the first display state and the second display state lies in transparency. After determining the application interface to be displayed in the second split-screen application window, the terminal controls the second split-screen application window to switch from the second display state to the first display state, i.e., the transparency of the second split-screen application window is converted from high transparency to low transparency.

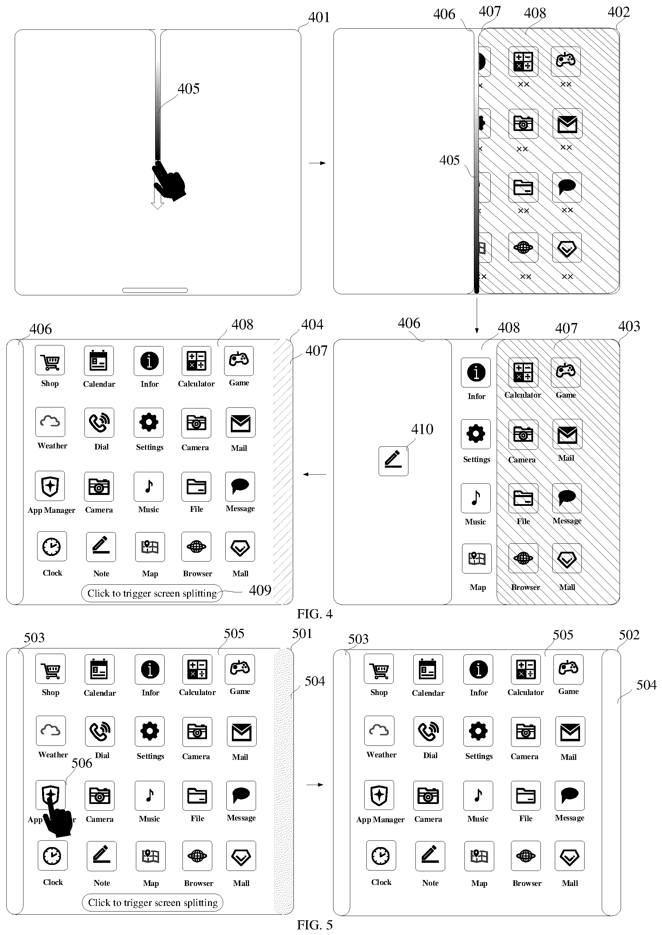

Schematically, FIG. 4 is a schematic diagram of a split-screen entry animation according to some embodiments of the present disclosure. In the illustrated embodiments, in a first display interface 401, the sliding operation is about to reach the second distance threshold, at which time the blurriness of the display interface reaches its maximum, and a dividing line 605 is displayed. When the sliding distance reaches the second distance threshold, the split-screen entry animation is displayed. In a second display interface 402, a first split-screen application window 406 and a second split-screen application window 407 are located on the left and right sides of the dividing line 405. During the transition from the first display interface 401 to the second display interface 402, the blurriness of the display interface gradually decreases. Additionally, the original application is displayed in the foreground, with the first split-screen application window 406 in the first display state (i.e., opaque), and the second split-screen application window 407 in the second display state (i.e., with higher transparency than the first split-screen application window). The split-screen application selection interface 408 is displayed below the first and second split-screen application windows. In a third display interface 403, the first split-screen application window 406 moves in the first direction, and the second split-screen application window 407 moves in the second direction, where the first direction is leftward and the second direction is rightward. During the movement of the first split-screen application window 406 to the left, an application icon 410 of the original application is displayed within the first split-screen application window 406, and the split-screen application selection interface 408 located beneath the first split-screen application window and the second split-screen application window gradually becomes visible. Additionally, during the movement of the first split-screen application window and the second split-screen application window, the blurriness of the display interface gradually decreases. In a fourth display interface 404, the first split-screen application window and the second split-screen application window have moved to the edges of the screen, at which time the blurriness is 0, and the split-screen application selection interface 408 is clearly and completely displayed. Additionally, the split-screen application selection interface displays a selection prompt 409 to prompt the user to select the target split-screen application.

FIG. 5 is a schematic diagram of a split-screen application selection interface according to some embodiments of the present disclosure. In the illustrated embodiments, a first split-screen application window 503 and a second split-screen application window 504 in a first display interface 501 have both moved to the edges of the screen. Due to the presence of the original application displayed in the foreground, the first split-screen application window 503 is in the first display state, i.e., an opaque state, while the second split-screen application window 504 is in the second display state, i.e., with a transparency higher than that of the first split-screen application window. A split-screen application selection interface 505 displays multiple application icons. In response to a selection operation of a target split-screen application 506 in the split-screen application selection interface 505, as shown in a second display interface 502, the second split-screen application window is switched from the second display state to the first display state, i.e., the opaque state.

2. When the continuous touch operation is received, there is no original application displayed in the foreground.

When there is no original application displayed in the foreground, the first split-screen application window and the second split-screen application window are displayed in the second display state. The first split-screen application window and the second split-screen application window are configured to display the target split-screen application.

When there is no original application, the terminal displays all first split-screen application windows in the second display state. In some embodiments, when the difference between the first display state and the second display state lies in transparency, the transparency of the first display state is lower than that of the second display state. Therefore, in this case, both the first split-screen application window and the second split-screen application window are in a semi-transparent state, and the split-screen application selection interface is displayed below the first split-screen application window and the second split-screen application window.

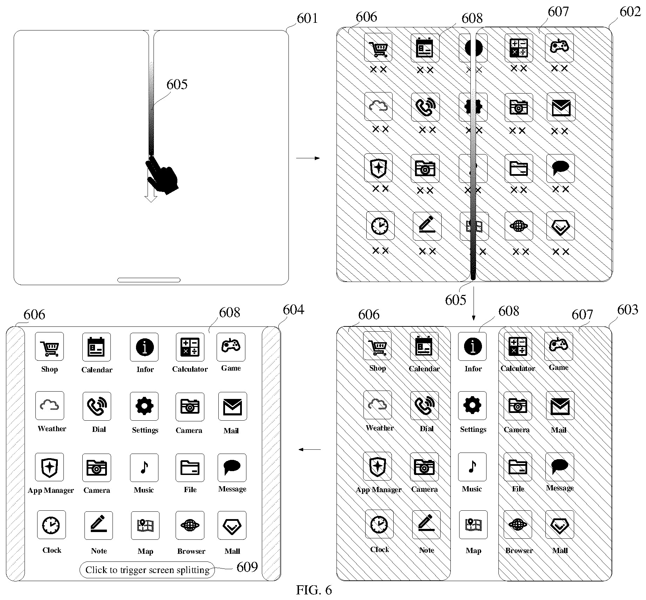

For illustrative purposes, FIG. 6 is a schematic diagram of a split-screen entry animation according to other embodiments of the present disclosure. In the illustrated embodiments, in a first display interface 601, the sliding distance is about to reach the second distance threshold, at which time the blurriness of the display interface reaches its maximum, and a dividing line 605 is displayed. When the sliding distance reaches the second distance threshold, the split-screen entry animation is displayed. In a second display interface 602, a first split-screen application window 606 and a second split-screen application window 607 are located on the left and right sides of the dividing line 605. During the transition from the first display interface 601 to the second display interface 602, the blurriness of the display interface gradually decreases. Additionally, there is no original application displayed in the foreground. Both the first split-screen application window 606 and the second split-screen application window 607 are in the second display state, i.e., with higher transparency, allowing the split-screen application selection interface 608 beneath the first and second screen application windows to be visible to the user. In a third display interface 603, the first split-screen application window 606 moves in the first direction, and the second split-screen application window 607 moves in the second direction, where the first direction is leftward and the second direction is rightward. During the movement of the first split-screen application window 606 and the second split-screen application window 607, the blurriness of the display interface gradually decreases. In a fourth display interface 604, the first split-screen application window and the second split-screen application window have moved to the edges of the screen, at which time the blurriness of the screen is 0, and the split-screen application selection interface is clearly and completely displayed. The split-screen application selection interface further displays a selection prompt 609 to prompt the user to select the target split-screen application. During the movement of the first split-screen application window and the second split-screen application window, both the split-screen application windows remain in the second display state.

When both the first split-screen application window and the second split-screen application window have moved to the edges of the screen, the terminal responds to a selection operation of the first target split-screen application and the second target split-screen application in the split-screen application selection interface to display the application interface of the first target split-screen application in the first split-screen application window and the application interface of the second target split-screen application in the second split-screen application window.

In the absence of original applications, the terminal may select two target split-screen applications for split-screen display according to requirements.

In some embodiments, the terminal responds to the selection operation of the first target split-screen application and the second target split-screen application in the split-screen application selection interface to display the application interface of the first target split-screen application in the second split-screen application window and display the application interface of the second target split-screen application in the first split-screen application window.

In some embodiments, the terminal responds to a click operation of a target split-screen application window and a selection operation of the first target split-screen application in the split-screen application selection interface, to display the application interface of the first target split-screen application in the target split-screen application window, where the target split-screen application window is one of the first split-screen application window and the second split-screen application window; the terminal responds to a selection operation of the second target split-screen application in the split-screen application selection interface, to display the application interface of the second target split-screen application in the split-screen application window other than the target split-screen application window.

In some embodiments, the terminal responds to a click operation of a target split-screen application window and a selection operation of the first target split-screen application in the split-screen application selection interface, to display the application interface of the first target split-screen application in the target split-screen application window; and after the terminal displays the first target split-screen application in the target split-screen application window, the terminal responds again to a click operation of a target split-screen application window, and a selection operation of the second target split-screen application in the split-screen application selection interface, to display the application interface of the second target split-screen application in the target split-screen application window. This allows users to select the target split-screen application to be displayed in the corresponding split-screen application interface according to their usage habits.

Additionally, when the terminal responds to the selection operation of the first target split-screen application in the split-screen application selection interface, it may switch the first split-screen application window from the second display state to the first display state, i.e., reducing the transparency of the first split-screen application window. When responding to the selection operation of the second target split-screen application in the split-screen application selection interface, the terminal may switch the second split-screen application window from the second display state to the first display state, i.e., reducing the transparency of the second split-screen application window.

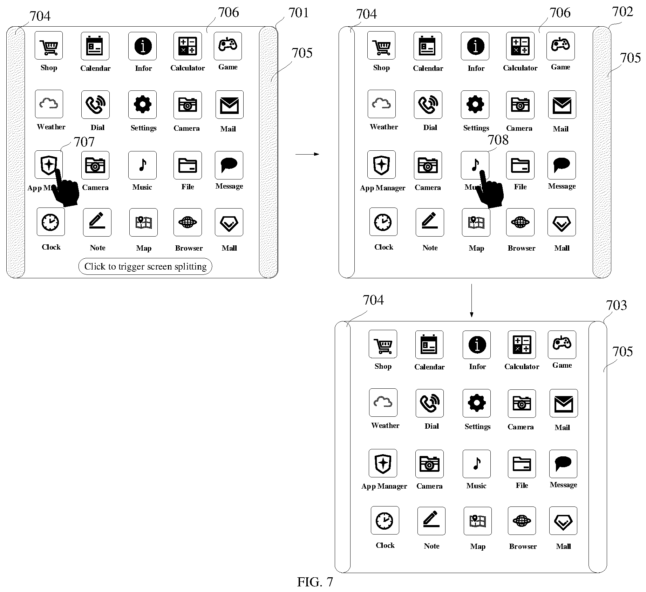

For illustrative purposes, FIG. 7 is a schematic diagram of a split-screen application selection interface according to other embodiments of the present disclosure. In the illustrated embodiments, a first split-screen application window 704 and a second split-screen application window 705 in the first display interface 701 have both moved to the edges of the screen. Since there is no original application displayed in the foreground, the first split-screen application window 704 and the second application selection interface 705 are both in the second display state, i.e., the transparent state. A split-screen application selection interface 706 displays application icons for multiple applications. The terminal responds to the selection operation of a first target split-screen application 707 in the split-screen application selection interface, for example, as shown in a second display interface 702, to switch the display state of the first split-screen application window 704 from the second display state to the first display state, i.e., the opaque state. The terminal responds to the selection operation of a second target split-screen application 708 in the split-screen application selection interface, for example, as shown in a third display interface 703, to switch the display state of the second split-screen application window 705 from the second display state to the first display state, i.e., the opaque state.

When the terminal receives the user's selection operation on the split-screen application selection interface, in addition to changing the display state of the first split-screen application window and the second split-screen application window, the terminal may further respond to a selection operation of a first application in the split-screen application selection interface to display the first split-screen application window moving in the first direction and the second split-screen application window moving in the second direction.

In the above design, the movements of the first split-screen application window and the second split-screen application window are opposite to the movements to the screen edges in the split-screen entry animation, such that a visual effect of closing the window is presented to the user.

The first direction and the second direction are opposite directions. When the continuous touch operation is a sliding operation, the sliding direction is perpendicular to the first direction and the second direction.

When the first split-screen application window and the second split-screen application window stop moving, the split-screen application interface may be displayed in both the first split-screen application window and the second split-screen application window.

In some embodiments, the first split-screen application window and the second split-screen application window move toward each other at the same speed and stop moving when they are connected.

When the original application is displayed in the foreground, the first split-screen application window displays the application interface of the original application, and the second split-screen application window displays the application interface of the target split-screen application based on the selection operation in the split-screen application selection interface.

When there is no original application displayed in the foreground, based on the selection operation of the first target split-screen application in the split-screen application selection interface, the first split-screen application window displays the first target split-screen application, and based on the selection operation of the second target split-screen application in the split-screen application selection interface, the second split-screen application window displays the second target split-screen application.

In some implementations, as the first split-screen application window and the second split-screen application window move toward each other, the blurriness of the split-screen application selection interface gradually increases, and the display area gradually decreases. When the first split-screen application window and the second split-screen application window stop moving, the split-screen application selection interface is completely covered, and the split-screen application selection interface is no longer displayed.

In other implementations, during the movement process, the first split-screen application window and the second split-screen application window each display the application icon of a corresponding split-screen application. When the first split-screen application window and the second split-screen application window stop moving, an animation where the application icons fade out of the screen is displayed, the application icons are stopped being displayed, and the split-screen application interface is displayed in each of the first split-screen application window and the second split-screen application window.

In other implementations, when the first split-screen application window and the second split-screen application window stop moving, a split-screen control widget is displayed between the two split-screen application windows. The widget is triggered to control the display state of the split-screen application windows.

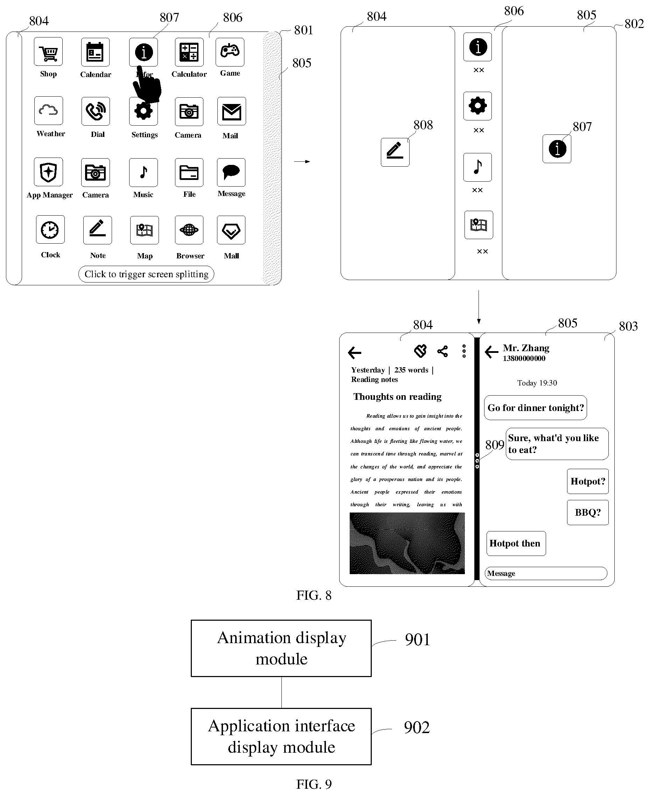

Schematically, FIG. 8 is a schematic diagram of entering a split-screen mode according to some embodiments of the present disclosure. In a first display interface 801, a first split-screen application window 804 and a second split-screen application window 805 are located at the edges of the screen. A split-screen application selection interface 806 displays application icons for multiple split-screen applications. The terminal receives a click operation by the user on an information application icon 807 in the split-screen application selection interface. In a second display interface 802, the first split-screen application window 804 moves to the right, while the second split-screen application window 805 moves in the opposite direction to the first split-screen application window 804, i.e., to the left. During the movement of the first split-screen application window 804 and the second split-screen application window 805, the blurriness of the split-screen application selection interface 806 gradually increases. Additionally, during the movement, the first split-screen application window 804 and the second split-screen application window 805 display a memo application icon 808 and the information application icon 807, respectively. When the first split-screen application window and the second split-screen application window come into contact, the movement stops, the first split-screen application window displays the original application interface, which is the memo application interface, and the second split-screen application window 805 displays the application interface of the target split-screen application, which is the information application interface. Additionally, in a third display interface 803, a split-screen control widget 809 is displayed between the first split-screen application window and the second split-screen application window.

When the terminal detects a continuous touch operation but the continuous touch operation does not meet the split-screen entry condition and the continuous touch operation ends, a first exit animation may be displayed. The first exit animation is a reverse animation of the split-screen trigger animation.

The failure to meet the split-screen entry condition may be due to factors such as sliding distance or sliding direction. For example, when the sliding distance does not reach the second distance threshold while the sliding operation has stopped, the split-screen entry condition is not met.

The reverse animation of the split-screen trigger animation is a reverse process of the split-screen trigger animation. For example, the split-screen trigger animation blurs the current user interface based on the sliding distance of the sliding operation and displays a dividing line on the current user interface based on the sliding distance. Therefore, the reverse animation of the split-screen trigger animation is to reverse the blurriness of the current user interface and gradually shorten the dividing line until the blurriness reaches the minimum level and the dividing line disappears, based on the end of the sliding operation.

Similarly, when the continuous touch operation is another operation, the reverse animation of the split-screen trigger animation is displayed when the split-screen entry condition is not met and the continuous touch operation ends, which will not be repeated herein.

After completing the split-screen display, in a case where the user needs to exit the split-screen interface, the terminal responds to a split-screen exit operation and displays a second exit animation. The second exit animation is configured to trigger a restoration of a display state prior to split screen.

The split-screen exit operation may include a user operation such as a trigger operation or a returning operation to a split-screen control widget, a sidebar control, or a taskbar control.

In some embodiments, the second exit animation may be a reverse animation of the split-screen entry animation.

In some embodiments, the second exit animation may be a dynamic effect set by developers during the development process to align with human logical thinking, which is not limited herein.

The following describes some embodiments of an apparatus according to the present disclosure, which may be configured to implement the method embodiments of the present disclosure. For details not disclosed in the apparatus embodiments of the present disclosure, reference may be made to the method embodiments of the present disclosure.

Referring to FIG. 9, FIG. 9 is a structural block diagram of a split-screen display apparatus according to some embodiments of the present disclosure. The apparatus may include:
an animation display module 901, configured to display a split-screen trigger animation based on a touch parameter of a continuous touch operation, in a case where the continuous touch operation is received and the continuous touch operation meets a split-screen trigger condition;
where the animation display module 901 is further configured to display a split-screen entry animation, in a case where the continuous touch operation meets a split-screen entry condition and the continuous touch operation ends; where the split-screen entry animation is configured to trigger a transition display of a split-screen application selection interface; and
an application interface display module 902, configured to enter a split-screen mode and display a split-screen application interface in the split-screen mode, in response to a selection operation of a target split-screen application in the split-screen application selection interface; where the split-screen application interface includes an application interface of the target split-screen application.

In some embodiments, the continuous touch operation is a sliding operation;
the animation display module 901 is further configured to:
in a case where a sliding operation is received and a sliding distance of the sliding operation reaches a first distance threshold, display the split-screen trigger animation based on the sliding distance of the sliding operation;
in a case where the sliding distance of the sliding operation reaches a second distance threshold and the sliding operation ends, display the split-screen entry animation; where the second distance threshold is greater than the first distance threshold.

In some embodiments, the animation display module 901 is further configured to:
perform a blurring process on a current user interface based on the sliding distance of the sliding operation, and display a dividing line on the current user interface based on the sliding distance;
where blurriness caused by the blurring process is positively correlated with the sliding distance, and a length of the dividing line is positively correlated with the sliding distance.

In some embodiments, the animation display module 901 is further configured to:
display a first split-screen application window and a second split-screen application window; where the first split-screen application window and the second split-screen application window are configured to display the split-screen application interface;
display an animation where the first split-screen application window moves in a first direction and the second split-screen application window moves in a second direction; where the first direction is opposite to the second direction, and the split-screen application selection interface is located below the first split-screen application window and the second split-screen application window; and
in a case where the first split-screen application window moves to a first screen edge and the second split-screen application window moves to a second screen edge, display the split-screen application selection interface; where a part of the first split-screen application window and a part of the second split-screen application window are located on an upper layer of the split-screen application selection interface.

In some embodiments, the animation display module 901 is further configured to:
in a case where an original application that is displayed in a foreground exists, display the first split-screen application window in a first display state and the second split-screen application window in a second display state; where the first split-screen application window is configured to display the original application and the second split-screen application window is configured to display the target split-screen application;
the application interface display module 902 is further configured to:
   in response to the selection operation of the target split-screen application in the split-screen application selection interface, display an application interface of the original application in the first split-screen application window and an application interface of the target split-screen application in the second split-screen application window.

In some embodiments, the animation display module 901 is further configured to:
in response to the selection operation of the target split-screen application in the split-screen application selection interface, switch the second split-screen application window from the second display state to the first display state.

In some embodiments, the animation display module 901 is further configured to:
display the first split-screen application window and the second split-screen application window in a second display state, in a case where no original application that is displayed in a foreground exists; where the first split-screen application window and the second split-screen application window are configured to display the target split-screen application;
the application interface display module 902 is further configured to:
   in response to a selection operation in the split-screen application selection interface for a first target split-screen application and a second target split-screen application, display an application interface of the first target split-screen application in the first split-screen application window, and display an application interface of the second target split-screen application in the second split-screen application window.

In some embodiments, the animation display module 901 is further configured to:
in response to the selection operation of the first target split-screen application in the split-screen application selection interface, switch the first split-screen application window from the second display state to a first display state; and
in response to the selection operation of the second target split-screen application in the split-screen application selection interface, switch the second split-screen application window from the second display state to the first display state.

In some embodiments, a transparency of a split-screen application window in the first display state is lower than a transparency of the split-screen application window in the second display state.

In some embodiments, the animation display module 901 is further configured to:
in response to a selection operation of a first application in the split-screen application selection interface, display an animation where the first split-screen application window moves in the second direction and the second split-screen application window moves in the first direction;
the application interface display module 902 is further configured to:
   in a case where the first split-screen application window and the second split-screen application window stop moving, display the split-screen application interface in the first split-screen application window and the second split-screen application window.

In some embodiments, the animation display module 901 is further configured to:
in a case where the continuous touch operation does not meet the split-screen entry condition and the continuous touch operation ends, display a first exit animation; where the first exit animation is a reverse animation of the split-screen trigger animation.

In some embodiments, the animation display module 901 is further configured to:
in response to a split-screen exit operation, display a second exit animation; where the second exit animation is configured to trigger a restoration of a display state prior to split screen.

In the embodiments of the present disclosure, the terminal may display different animations at different stages of the user's continuous touch operation. When the split-screen trigger condition is met, the terminal displays the split-screen trigger animation; when the split-screen entry condition is met, the terminal displays the split-screen entry animation. By combining the display animations with the user's gesture operations and displaying different animations based on the user's gestures, the terminal may provide natural guidance to the user for completing the split-screen operation. Furthermore, when the terminal receives the user's selection operation for the target application in the split-screen application selection interface, the terminal may display the split-screen application interface in the split-screen mode.

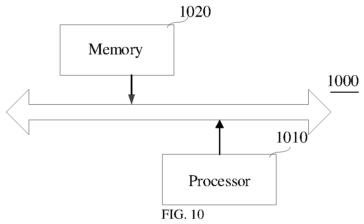

Referring to FIG. 10, FIG. 10 is a structural block diagram of a terminal according to some embodiments of the present disclosure. The terminal 1000 may be implemented as the terminal in the above-described embodiments. The terminal 1000 may include one or more of the following components: a processor 1010 and a memory 1020.

The processor 1010 may include one or more processing cores. The processor 1010 connects various parts within the terminal 1000 via various interfaces and lines, and executes the terminal 1000's various functions and processes data, by running or executing instructions, programs, code sets, or instruction sets stored in the memory 1020 and by calling data stored in the memory 1020. In some embodiments, the processor 1010 may be implemented using at least one of the following hardware forms: digital signal processing (DSP), field-programmable gate array (FPGA), or programmable logic array (PLA). The processor 1010 may integrate one or more of the following: a central processing unit (CPU), a graphics processing unit (GPU), a neural network processing unit (NPU), and a modem. The CPU primarily handles an operating system, user interface, and applications; the GPU is responsible for rendering and drawing the content displayed on the touchscreen; the NPU implements artificial intelligence (AI) functions; and the modem handles wireless communication. It should be understood that the modem may be implemented separately via a dedicated chip rather than integrated into processor 1010.

The memory 1020 may include random access memory (RAM) and may also include read-only memory (ROM). In some embodiments, the memory 1020 includes a non-transitory computer-readable storage medium. The memory 1020 may be configured to store instructions, programs, code, code sets, or instruction sets. The memory 1020 may include a program storage area and a data storage area, where the program storage area may store instructions for implementing the operating system, instructions for at least one function (e.g., touch control function, sound playback function, image playback function, etc.), instructions for implementing the following method embodiments, etc.; the data storage area may store data created based on the use of the terminal 1000 (e.g., audio data, phone book, etc.).

In addition, those skilled in the art will understand that the structure of the terminal 1000 as shown does not constitute a limitation on the terminal. The terminal may include more or fewer components than those shown in the drawing, or may combine certain components, or may have different component arrangements. For example, the terminal 1000 may further include a display screen, a camera assembly, a microphone, a speaker, a radio frequency circuit, an input unit, sensors (such as an accelerometer, a gyroscope, a light sensor, etc.), an audio circuit, a Wi-Fi module, a power supply, a Bluetooth module, and other components, which are not described in detail herein.

The present disclosure further provides a computer-readable storage medium, which stores at least one program code. The program code is loaded and executed by a processor to implement the split-screen display method described in the above embodiments.

The present disclosure further provides a computer program product, which includes computer instructions stored in a computer-readable storage medium. A processor of a computer device reads the computer instructions from the computer-readable storage medium, and the processor executes the computer instructions, causing the computer device to execute the split-screen display method described in the above embodiments.

It should be understood that the term "multiple" as used herein refers to two or more. The term "and/or" describes the relationship between associated objects, indicating that three relationships may exist, such as A and/or B, which may represent the following three cases: A exists alone, A and B exist together, or B exists alone. The character "/" generally indicates that the associated objects before and after it are in an "or" relationship. Additionally, the step numbers described herein are merely illustrative examples of a possible execution sequence between steps. In other embodiments, the above steps may be executed out of order, such as two steps with different numbers being executed simultaneously, or two steps with different numbers being executed in the opposite order to that shown in the drawings, which is not limited herein.

The above description is merely some embodiments of the present disclosure and is not intended to limit the scope of the present disclosure. Any modifications, equivalent replacements, improvements, etc., made within the spirit and principles of the present disclosure should be included within the scope of the present disclosure.

## Claims

1. A split-screen display method, comprising:
displaying a split-screen trigger animation based on a touch parameter of a continuous touch operation, in a case where the continuous touch operation is received and the continuous touch operation meets a split-screen trigger condition;
displaying a split-screen entry animation, in a case where the continuous touch operation meets a split-screen entry condition and the continuous touch operation ends; wherein the split-screen entry animation is configured to trigger a transition display of a split-screen application selection interface; and
entering a split-screen mode and displaying a split-screen application interface in the split-screen mode, in response to a selection operation of a target split-screen application in the split-screen application selection interface; wherein the split-screen application interface comprises an application interface of the target split-screen application.

2. The method according to claim 1, wherein the continuous touch operation is a sliding operation; the displaying a split-screen trigger animation based on a touch parameter of a continuous touch operation, in a case where the continuous touch operation is received and the continuous touch operation meets a split-screen trigger condition, comprises:
in a case where a sliding operation is received and a sliding distance of the sliding operation reaches a first distance threshold, displaying the split-screen trigger animation based on the sliding distance of the sliding operation;
wherein the displaying a split-screen entry animation, in a case where the continuous touch operation meets a split-screen entry condition and the continuous touch operation ends, comprises:
in a case where the sliding distance of the sliding operation reaches a second distance threshold and the sliding operation ends, displaying the split-screen entry animation; wherein the second distance threshold is greater than the first distance threshold.

3. The method according to claim 2, wherein the displaying the split-screen trigger animation based on the sliding distance of the sliding operation comprises:
performing a blurring process on a current user interface based on the sliding distance of the sliding operation, and displaying a dividing line on the current user interface based on the sliding distance;
wherein blurriness caused by the blurring process is positively correlated with the sliding distance, and a length of the dividing line is positively correlated with the sliding distance.

4. The method according to claim 1, wherein the displaying a split-screen entry animation comprises:
displaying a first split-screen application window and a second split-screen application window; wherein the first split-screen application window and the second split-screen application window are configured to display the split-screen application interface;
displaying an animation where the first split-screen application window moves in a first direction and the second split-screen application window moves in a second direction; wherein the first direction is opposite to the second direction, and the split-screen application selection interface is located on a lower layer of the first split-screen application window and the second split-screen application window; and
in a case where the first split-screen application window moves to a first screen edge and the second split-screen application window moves to a second screen edge, displaying the split-screen application selection interface; wherein a part of the first split-screen application window and a part of the second split-screen application window are located on an upper layer of the split-screen application selection interface.

5. The method according to claim 4, wherein the displaying a first split-screen application window and a second split-screen application window comprises:
in a case where an original application that is displayed in a foreground exists, displaying the first split-screen application window in a first display state and the second split-screen application window in a second display state; wherein the first split-screen application window is configured to display the original application and the second split-screen application window is configured to display the target split-screen application;
the displaying a split-screen application interface in the split-screen mode, in response to a selection operation of a target split-screen application in the split-screen application selection interface, comprises:
in response to the selection operation of the target split-screen application in the split-screen application selection interface, displaying an application interface of the original application in the first split-screen application window and an application interface of the target split-screen application in the second split-screen application window.

6. The method according to claim 5, wherein before the displaying an application interface of the original application in the first split-screen application window and an application interface of the target split-screen application in the second split-screen application window, the method further comprises:
in response to the selection operation of the target split-screen application in the split-screen application selection interface, switching the second split-screen application window from the second display state to the first display state.

7. The method according to claim 4, wherein the displaying a first split-screen application window and a second split-screen application window comprises:
displaying the first split-screen application window and the second split-screen application window in a second display state, in a case where no original application that is displayed in a foreground exists; wherein the first split-screen application window and the second split-screen application window are configured to display the target split-screen application;
the displaying a split-screen application interface in the split-screen mode, in response to a selection operation of a target split-screen application in the split-screen application selection interface, comprises:
in response to a selection operation in the split-screen application selection interface for a first target split-screen application and a second target split-screen application, displaying an application interface of the first target split-screen application in the first split-screen application window, and displaying an application interface of the second target split-screen application in the second split-screen application window.

8. The method according to claim 7, wherein before the displaying an application interface of the first target split-screen application in the first split-screen application window, and displaying an application interface of the second target split-screen application in the second split-screen application window, the method further comprises:
in response to the selection operation of the first target split-screen application in the split-screen application selection interface, switching the first split-screen application window from the second display state to a first display state; and
in response to the selection operation of the second target split-screen application in the split-screen application selection interface, switching the second split-screen application window from the second display state to the first display state.

9. The method according to claim 5 or 8, wherein a transparency of a split-screen application window in the first display state is lower than a transparency of the split-screen application window in the second display state.

10. The method according to claim 4, wherein the displaying a split-screen application interface in the split-screen mode, in response to a selection operation of a target split-screen application in the split-screen application selection interface, comprises:
in response to a selection operation of a first application in the split-screen application selection interface, displaying an animation where the first split-screen application window moves in the second direction and the second split-screen application window moves in the first direction; and
in a case where the first split-screen application window and the second split-screen application window stop moving, displaying the split-screen application interface in the first split-screen application window and the second split-screen application window.

11. The method according to claim 1, wherein after the displaying a split-screen trigger animation based on a touch parameter of the continuous touch operation, the method further comprises:
in a case where the continuous touch operation does not meet the split-screen entry condition and the continuous touch operation ends, displaying a first exit animation; wherein the first exit animation is a reverse animation of the split-screen trigger animation.

12. The method according to claim 1, wherein after the displaying a split-screen entry animation, the method further comprises:
in response to a split-screen exit operation, displaying a second exit animation; wherein the second exit animation is configured to trigger a restoration of a display state prior to split screen.

13. A split-screen display apparatus, comprising:
an animation display module, configured to display a split-screen trigger animation based on a touch parameter of a continuous touch operation, in a case where the continuous touch operation is received and the continuous touch operation meets a split-screen trigger condition, and further configured to display a split-screen entry animation, in a case where the continuous touch operation meets a split-screen entry condition and the continuous touch operation ends; wherein the split-screen entry animation is configured to trigger a transition display of a split-screen application selection interface; and
an application interface display module, configured to enter a split-screen mode and display a split-screen application interface in the split-screen mode, in response to a selection operation of a target split-screen application in the split-screen application selection interface; wherein the split-screen application interface comprises an application interface of the target split-screen application.

14. The apparatus according to claim 13, the continuous touch operation is a sliding operation;
the animation display module is further configured to:
in a case where a sliding operation is received and a sliding distance of the sliding operation reaches a first distance threshold, display the split-screen trigger animation based on the sliding distance of the sliding operation;
in a case where the sliding distance of the sliding operation reaches a second distance threshold and the sliding operation ends, display the split-screen entry animation; wherein the second distance threshold is greater than the first distance threshold.

15. The apparatus according to claim 14, wherein the animation display module is further configured to:
perform a blurring process on a current user interface based on the sliding distance of the sliding operation, and display a dividing line on the current user interface based on the sliding distance;
wherein blurriness caused by the blurring process is positively correlated with the sliding distance, and a length of the dividing line is positively correlated with the sliding distance.

16. The apparatus according to claim 13, wherein the animation display module is further configured to:
display a first split-screen application window and a second split-screen application window; wherein the first split-screen application window and the second split-screen application window are configured to display the split-screen application interface;
display an animation where the first split-screen application window moves in a first direction and the second split-screen application window moves in a second direction; wherein the first direction is opposite to the second direction, and the split-screen application selection interface is located on a lower layer of the first split-screen application window and the second split-screen application window; and
in a case where the first split-screen application window moves to a first screen edge and the second split-screen application window moves to a second screen edge, display the split-screen application selection interface; wherein a part of the first split-screen application window and a part of the second split-screen application window are located on an upper layer of the split-screen application selection interface.

17. The apparatus according to claim 16, wherein the animation display module is further configured to:
in a case where an original application that is displayed in a foreground exists, display the first split-screen application window in a first display state and the second split-screen application window in a second display state; wherein the first split-screen application window is configured to display the original application and the second split-screen application window is configured to display the target split-screen application;
wherein the application interface display module is further configured to:
in response to the selection operation of the target split-screen application in the split-screen application selection interface, display an application interface of the original application in the first split-screen application window and an application interface of the target split-screen application in the second split-screen application window.

18. A terminal, comprising a processor and a memory; wherein the memory stores at least one instruction, the at least one instruction being configured to be executed by the processor to implement the split-screen display method according to any one of claims 1 to 12.

19. A computer-readable storage medium, storing at least one program code; wherein the at least one program code is configured to be loaded and executed by a processor to implement the split-screen display method according to any one of claims 1 to 12.

20. A computer program product, comprising computer instructions; wherein the computer instructions are stored in a computer-readable storage medium; a processor of a computer device is capable of reading the computer instructions from the computer-readable storage medium and executing the computer instructions, and the computer device is caused to perform the split-screen display method according to any one of claims 1 to 12.
